# EUROPEAN PATENT SPECIFICATION

(11) **EP 1 241 461 B1**
(45) Date of publication and mention of the grant of the patent: **07.06.2006**
(21) Application number: 02004958.1
(22) Date of filing: 05.03.2002
(51) Int. Cl.: G01M 11/02

(54) **Method for measuring light transmittance of lenses and apparatus therefor**
Verfahren und Vorrichtung zur Messung der Lichtdurchlässigkeit von Linsen
Procédé et dispositif de mesure de la transmission pour lumière de lentilles

(30) Priority: 14.03.2001 JP 2001072766
(43) Date of publication of application: 18.09.2002
(73) Proprietor: HOYA CORPORATION, Shinjuku-ku, Tokyo 161-8525 (JP)
(72) Inventor: Akiyama, Hisanori, Hoya Corporation, Tokyo, 161-8525 (JP); Yoda, Toshiro, Hoya Corporation, Tokyo, 161-8525 (JP)
(74) Representative: Kuhnen & Wacker

(56) References cited:
- US-A- 3 904 294
- US-A- 5 108 174
- PATENT ABSTRACTS OF JAPAN vol. 006, no. 082 (P-116), 20 May 1982 (1982-05-20) & JP 57 020636 A (OLYMPUS OPTICAL CO LTD), 3 February 1982 (1982-02-03)
- PATENT ABSTRACTS OF JAPAN vol. 1999, no. 10, 31 August 1999 (1999-08-31) & JP 11 142241 A (TOPCON CORP), 28 May 1999 (1999-05-28)

## Description

### Field of the Invention

The present invention relates to a method for relatively easily measuring light transmittance of an optical lens such as a spectacle lens according to claim 1 and also to an apparatus according to claim 3 for carrying out the inventive method.

### Prior Art

In spectacle lens stores, it is occasionally required that light transmittance of a spectacle lens with respect to ultraviolet light or visible light be examined as one of various examinations of properties of the spectacle lens.

As the method for measuring the light transmittance, a method in which the light transmittance is measured by using an integrating sphere in a system detecting light accurately without causing error in the value obtained by the measurement even when the light of measurement is diffused or converged by the lens for examination is known. However, the integrating sphere is expensive and it is difficult that the integrating sphere is widely distributed among spectacle lens stores.

Therefore, apparatuses for easily measuring light transmittance without using the integrating sphere have heretofore been proposed. For example, an apparatus and a method for correcting the value of light transmittance in accordance with the dioptric power of the lens to be examined are disclosed in paragraph [0027] of Japanese Patent Application Laid-Open No. Heisei 11(1999)-211617.

Fig. 6 shows a diagram describing the principle of the method disclosed in Japanese Patent Application Laid-Open No. Heisei 11(1999)-211617 described above. As shown in Fig. 6, rays of the measuring light L emitted from a light source 1 are arranged into parallel rays by a convex lens 2, are passed through a lens 3 to be examined and an interference filter 4 and are detected by a light receiving element 5.

Light transmittance of the light having a wavelength in the range narrowed by the interference filter 4 can be easily obtained from the ratio of the intensity of light detected by the light receiving element 5 in the absence of the lens 3 to be examined to the intensity of the light detected by the light receiving element 5 in the presence of the lens 3 to be examined.

In the above method, a relatively good accuracy in the detection of light by the light receiving element 5 can be maintained since the measuring light is sent into the light receiving element 5 as rays arranged as parallel as possible. Therefore, the light transmittance can be measured with a relatively good accuracy.

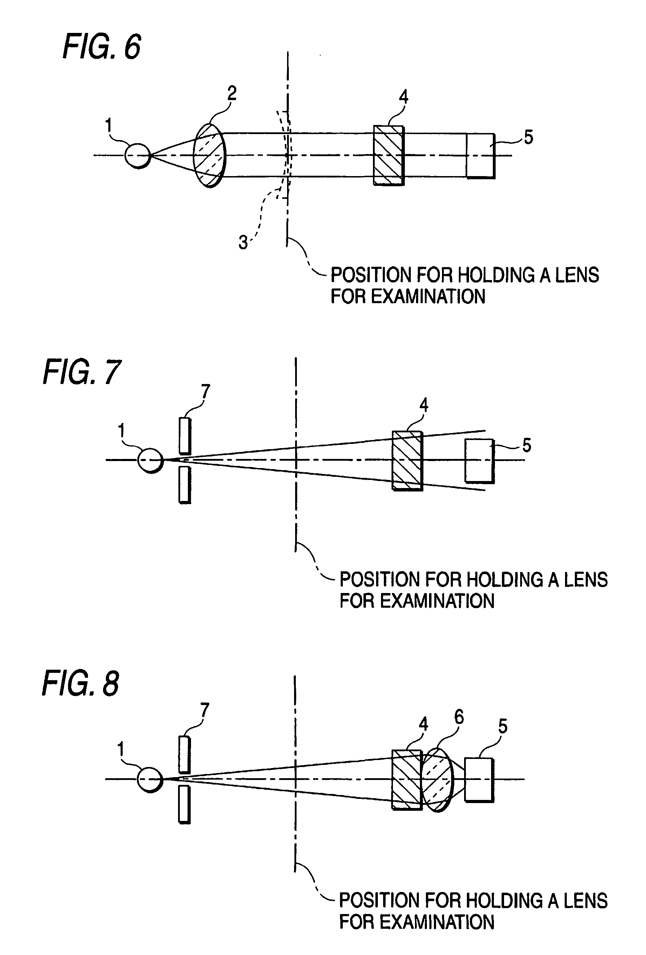

In another method, as shown in Fig. 7, the convex lens 2 shown in Fig. 6 is removed and a bundle of rays narrowed to a necessary amount by a pinhole 7 is sent to the lens 3 to be examined. In still another method, as shown in Fig. 8, a convex lens 6 is disposed between an interference filter 4 and the light receiving element 5 in the system shown in Fig. 7 and rays passed through the lens 3 to be examined converge and are sent into the light receiving element.

The above methods for measuring light transmittance have a drawback in that the error in the measurement increases as the dioptric power of the lens for examination increases although the light transmittance can be easily measured.

It was found by the present inventors that the increase in the error arises due to the following reason. With lenses having different dioptric powers, curvatures of the surfaces of the lens at the front side and at the back side are different among the lenses. In accordance with the conventional methods, the sectional area of a bundle of rays of the measuring light passing through the lens to be measured is relatively great. Therefore, the curvature of the surface is different depending on the position within the section of the bundle of rays and the refractive effect on the ray is different depending on the position. The thickness of the lens is also different depending on the position. Moreover, the above effects are different among lenses having different dioptric powers. As the result, the area, the position, the direction and the amount of the incident rays of the measuring light are different depending on the dioptric power of the lens to be examined within the area of light detection of the light detector and an error is considered to arise in the measurement of the amount of light due to these effects.

For example, when a light detector such as a photodiode is used, the sensitivity of light detection on the surface of the light detection is not always uniform within the entire surface of the light detection. In other words, the obtained sensitivity varies due to the difference in the sensitivity among the positions within the surface of the light detection. When the position of the incident light changes in each measurement, an error arises in the measurement. In accordance with the above conventional methods for measuring the light transmittance, the sectional area and the direction of the bundle of rays of the measuring light tend to vary to a great degree depending on the dioptric power of the lens to be examined. As a result, the position of the incident measuring light in the light detector is different to a great degree depending on the dioptric power of the lens to be examined and an error is considered to arise in the obtained result.

In the light detector described above such as a photodiode, the sensitivity of the detection changes considerably depending on the angle of the incident measuring light with respect to the surface of the light detection. In other words, the obtained sensitivity fluctuates depending on the incident angle of the rays. In the above conventional methods for measuring the light transmittance, each ray constituting the bundle of rays of the measuring light passes through and is refracted by the lens to be examined at one of positions having various curved shapes. Moreover, the degree of the refraction of the ray varies depending on the dioptric power of the lens to be examined. As a result, the incident angle of each ray of the measuring light with respect to the light detector is different among the rays and an error is considered to arise in the measurement.

The total thickness of the lens to be examined through which the bundle of rays of the measuring light pass is different depending on the dioptric power of the lens to be examined. When the sectional area of the bundle of rays of the measuring light is relatively great and the difference in the dioptric power is great, the difference in attenuation of the amount of light cannot be neglected and an error is considered to arise in the measurement.

Therefore, in the apparatus for measuring the light transmittance disclosed in Japanese Patent Application Laid-Open No. Heisei 11(1999)-211617, the dioptric power of the lens to be examined must be known in advance in order that the light transmittance of the lens to be examined is obtained and this adversely affect the easiness of the measurement significantly.

### Problem to be Solved by the Invention

The present invention has been made to overcome the above drawbacks and it is an object of the present invention to provide a method for measuring light transmittance which enables an inexpensive and easy measurement of light transmittance of an optical lens having refractive power with excellent accuracy and an apparatus therefor.

### As the means for solving the above object, the present inventors found :

A method for measuring light transmittance which comprises deriving the light transmittance of a lens to be examined from a value corresponding to a ratio of an intensity of the measuring light detected by a means for detecting light when the lens to be examined is placed in a path of the light of measurement emitted from a light source and reaching the means for detecting light and the measuring light passing through the lens to be examined to an intensity of the measuring light detected by the means for detecting light when the lens to be examined is not placed in the path of the measuring light and the measuring light does not pass through the lens to be examined,
wherein the measuring light passes through the lens to be examined in a condition such that rays of the measuring light converge at or in a vicinity of a position where the lens to be examined is disposed.

The above object is also solved by an apparatus for measuring light transmittance which comprises a light source emitting measuring light, a light detector for detecting the measuring light, an apparatus for holding a lens to be examined which is disposed between the light source and the light detector and can hold or release the lens to be examined as desired and a first convergence lens through which rays of the measuring light converge at or in a vicinity of a position where the lens to be examined is disposed.

### Brief Description of Drawings

Fig. 1 shows a diagram exhibiting major portions of an apparatus for measuring light transmittance as an embodiment of the present invention;
Fig. 2 shows an expanded view of a portion of the apparatus shown in Fig. 1;
Fig. 3 shows a graph exhibiting accuracy of the measurement when the apparatus of the embodiment or a conventional apparatus was used;
Fig. 4 shows a diagram exhibiting a modified apparatus for measuring light transmittance as another embodiment of the present invention;
Fig. 5 shows a diagram exhibiting a modified apparatus for measuring light transmittance as still another embodiment of the present invention;
Fig. 6 shows diagram exhibiting a conventional method for measuring light transmittance;
Fig. 7 shows diagram exhibiting a conventional method for measuring light transmittance; and
Fig. 8 shows a diagram exhibiting a conventional method for measuring light transmittance.

The method for measuring light transmittance and the apparatus for measuring light transmittance as embodiments of the present invention will be described with reference to the Figures in the following.

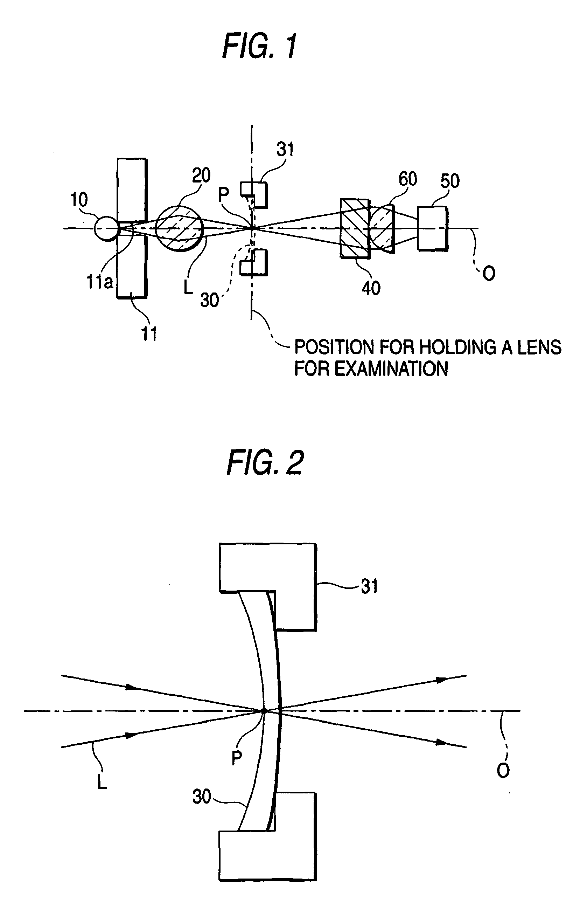

The apparatus for measuring light transmittance of the present embodiment comprises two apparatuses for measuring light transmittance which have the same optical system and different wavelength for the measurement. One of the two apparatuses is shown and the other apparatus is not shown in Fig. 1.

In Fig. 1, a light source 10, a pinhole plate 11, a ball lens 20, an apparatus for holding a lens 31 to be examined, an interference filter 40, a hemisphere lens 60 and a light receiving element 50 are disposed successively from the left to the right in Fig. 1 in a manner such that optical axes are placed on the same optical axis O.

The light source 10 emits rays of measurement L. A light emitting body which emits light containing light having the wavelength used for the measurement in a great amount is used as the light source. With the apparatus of the present embodiment, two apparatuses for measuring light transmittance are used so that the light transmittance can be measured at two different wavelengths of 380 nm and 550 nm. Therefore, in one of the two apparatuses for measuring light transmittance, a cold cathode tube which emits light having a peak of the intensity at a wavelength of 390 nm is used as the light source 10 and, in the other of the two apparatuses for measuring light transmittance, a cold cathode tube which emits light having a peak of the intensity at a wavelength of 545 nm is used as the light source 10. The peak of the intensity described above is obtained in a graph exhibiting the relation between the wavelength of the emitted light which is taken as the abscissa and the intensity of the emitted light which is taken as the coordinate. Of course, a black light, a fluorescent lamp or an incandescent lamp may also be used as the light source 10.

The pinhole plate 11 is used for narrowing the bundle of rays of the measuring light L emitted from the light source 10 by a pinhole 11a disposed on the optical axis O. The ball lens 20 is used for forming an image of the pinhole from the incident bundle of rays narrowed by the pinhole 11a on or in the vicinity of the surface of the lens to be examined at the side of the light source.

The pinhole plate 11 comprises a plate having a prescribed thickness so that the pinhole 11a has a prescribed depth in the direction of the optical axis O. This structure further plays a role of eliminating unnecessary bundle of rays. Another type of lens may be used in place of the above ball lens 20 (the first convergence lens). Any lens which exhibits the effect of convergence so that the measuring light L converges at a prescribed position, such a convex lens, can be used.

The apparatus for holding a lens 31 to be examined holds the lens 30 to be examined in a manner such that the lens 30 to be examined can be held or removed as desired. As shown in Fig. 2, the apparatus is constituted in a manner such that, when the lens 30 to be examined is held, the point of convergence P of the measuring light L by the effect of the ball lens 20 is on or in the vicinity of the surface of the lens 30 to be examined at the side of the light source. It is preferable that the point of convergence P is on the surface of the lens 30 to be examined at the side of the light source. However, the point of convergence P may be off the surface of the lens to be examined as long as the point of convergence P is in the vicinity of the surface of the lens to be examined.

The interference filter 40 is a filter which selectively transmits light having a wavelength in the vicinity of the wavelength used for the measurement. In the present embodiment, since the wavelengths used for the measurement are 380 nm and 550 nm, one of the two apparatuses for measuring light transmittance has an interference filter which selectively transmits light having a wavelength of 380±5 nm and the other apparatus has an interference filter which selectively transmits light having a wavelength of 550±10 nm. Of course, the interference filter 40 should be suitably selected in accordance with the wavelength used for the measurement.

The hemisphere lens 60 (the second convergence lens) is a lens used for convergence of the bundle of rays of the measuring light L at the light receiving sensor 50. Similarly to the case of the ball lens 20, another type of lens may be used in place of the above hemisphere lens 60. Any lens exhibiting the effect of the convergence such as a convex lens may be used. By using the hemisphere lens 60, the entire rays of the measuring light L are used as the incident light into the optimum area for receiving light of the light receiving element 50. The S/N ratio of the light receiving element 50 is thus improved and the error of the measurement can be decreased.

For the light receiving element 50 (the light detector), a photoelectric sensor which detects the measurment light L and outputs an electric voltage corresponding to the amount of the light is used. In the present embodiment, a photodiode is used. It is sufficient that the light receiving element 50 can convert the energy of the light incident into the light receiving surface into the electric energy in an amount corresponding to the intensity of the light. Other light detectors such as a phototransistor and a Cd cell may be used.

Using the above apparatus for measuring light transmittance, the value of the output electric voltage or power from the light receiving element 50 when the lens 30 to be examined is held at the apparatus for holding a lens 31 to be examined and the value of the output electric voltage or power from the light receiving element 50 when the lens 30 to be examined is not held at the apparatus for holding a lens 31 to be examined can be obtained. The light transmittance can be obtained from the ratio of these two values.

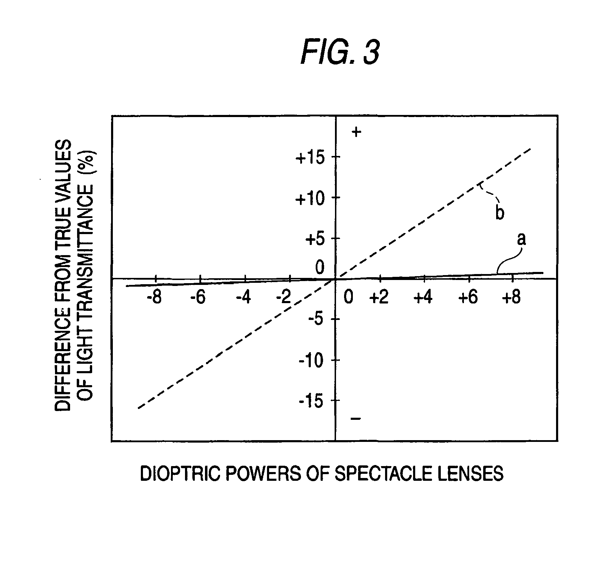

Fig. 3 shows a graph exhibiting accuracy of the measurement when the apparatus of the above embodiment or a conventional apparatus was used. For the graph shown in Fig. 3, various spectacle lenses having different dioptric powers were used as the lens to be examined. True values of the light transmittance of these spectacle lenses were obtained by using a high accuracy spectrometer comprising an integral sphere. The difference from the true value (the unit: %), which is the difference **a** between the light transmittance obtained by using the apparatus of the present embodiment and the above true value of the light transmittance or the difference **b** between the light transmittance obtained by using the conventional apparatus and the above true value of the light transmittance, is taken as the coordinate and the dioptric power of the lens to be examined (the unit: dioptry) is taken as the abscissa.

As clearly shown in Fig. 3, the difference from the true value **b** obtained by using the conventional apparatus for measuring light transmission was positive, i.e., the obtained value was greater than the true value, in the measurements of lenses having positive dioptric powers and negative, i.e., the obtained value was smaller than the true value, in the measurements of lenses having negative dioptric powers. In contrast, the difference from the true value **a** obtained by using the apparatus of the present embodiment was small, i.e., the obtained value was very close to the true value obtained by using the high accuracy spectrometer comprising an integral sphere, in the measurements of lenses having dioptric powers different in a wide range. Thus, it is shown that the high accuracy measurement could be achieved by using the apparatus of the present embodiment. It is very difficult that the accuracy shown above is obtained by using a conventional apparatus for measuring light transmittance which can be easily used.

It is considered that the above result can be obtained because the measuring light passes through the lens to be examined in a condition such that the bundle of rays of the light of measurement converges approximately on the surface of the lens to be examined and, therefore, the area of the measuring light incident into the surface of light detection in the light receiving element 50 can be held constant independently of the dioptric power of the lens to be examined.

The sectional area of the bundle of rays of the measuring light passing through the lens to be examined can be remarkably decreased when the measuring light passes through the lens to be examined in a condition such that the bundle of rays of the measuring light converges approximately on the surface of the lens to be examined. The sectional area of the bundle of rays of the measuring light passing through the lens to be examined is held approximately constant by placing the point of convergence on the surface of the lens to be examined at the side of the light source. It is considered that the error in the measurement due to the differences in the position and the direction of the incident light and the attenuation of the amount of light by the lens to be examined caused by the difference in the dioptric power of the lens to be examined (the difference in the curvature of the lens) can be remarkably decreased based on the above effects.

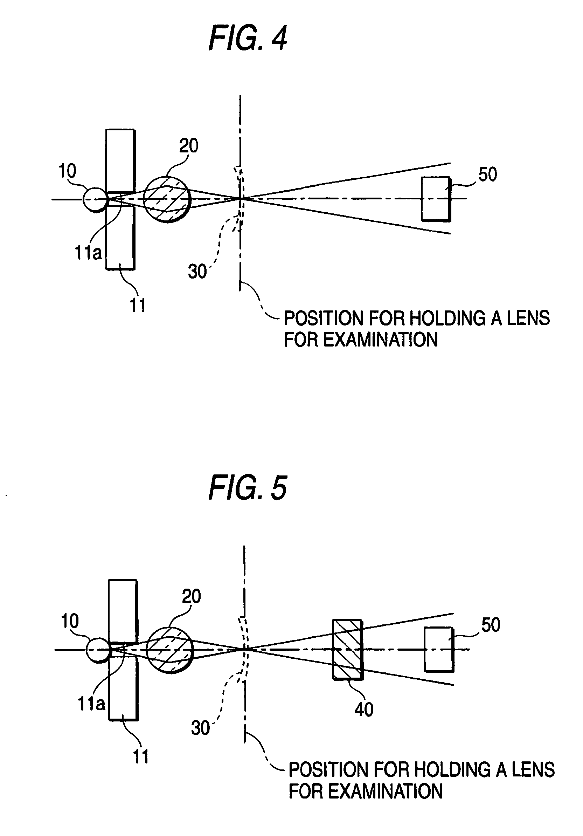

Figs. 4 and 5 show diagrams exhibiting modified apparatuses for measuring light transmittance as other embodiments of the present invention. In the embodiment shown in Fig. 4, the interference filter 40 and the hemisphere lens 60 are removed from the apparatus shown in Fig. 1. In the embodiment shown in Fig. 5, the hemisphere lens 60 alone is removed from the apparatus shown in Fig. 1. The measurement can be satisfactorily conducted by using these apparatuses when it is suitable for the object of the measurement. In other words, the object of the present invention can be sufficiently achieved by using the apparatuses having the modified constructions shown in Figs. 4 and 5 as long as the measuring light passes through the lens to be examined in the condition such that the measuring light converges in the vicinity of the lens to be examined so that the area of the measuring light incident into the light receiving element 50 is held approximately constant even when the dioptric power of the lens to be examined varies.

### Effect of the Invention

As described in detail in the above, the method for measuring light transmittance of the present invention comprises deriving light transmittance of a lens to be examined from a value corresponding to a ratio of an intensity of measuring light detected by a means for detecting light when the lens to be examined is placed in a path of the measuring light emitted from a light source and reaching the means for detecting light and the measuring light passes through the lens to be examined to an intensity of the measuring light detected by the means for detecting light when the lens to be examined is not placed in the path of the measuring light and the measuring light does not pass through the lens to be examined and is characterized in that the measuring light passes through the lens to be examined in a condition such that rays of the measuring light converge at or in a vicinity of a position where the lens to be examined is disposed. The apparatus of the present invention is used for the above process. The light transmittance of an optical lens having refractive power can be measured inexpensively and easily with excellent accuracy.

### Description of the reference numbers

- 1 and 10:: Light sources;
- 2:: a convex lens;
- 3 and 30:: lenses for examination;
- 4 and 40:: interference filters;
- 5 and 50:: light receiving elements;
- 7 and 11:: pinhole plates;
- 20:: a ball lens;
- 31:: an apparatus for holding a lens for examination; and
- 60:: a hemisphere lens.

## Claims

1. A method for measuring light transmittance which comprises deriving light transmittance of a lens to be examined from a value corresponding to a ratio of an intensity of measuring light detected by a light detecting means when the lens to be examined is placed in a path of the measuring light emitted from a light source and reaching said light detecting means and the measuring light passes through the lens to be examined with an intensity of the measuring light detected by said light detecting means when the lens to be examined is not placed in the path of the measuring and the measuring light does not pass through the lens to be examined,
**characterized in that**
a) the point of convergence (P) of the measuring light rays is formed so as to lie on the surface of the lens (30) to be examined at the side of the light source;
b) the light transmittance of the lens to be examined is measured with using only an apparatus, which consists essentially of a light source (10), a first convergence lens (20), an apparatus for holding a lens (31), an interference filter (40) and a light receiving element (50).

2. A method for measuring light transmittance according to Claim 1, wherein the light transmittance is measured with using an apparatus, which consists essentially of a light source (10), a pinhole plate (11), the first convergence lens 20 , an apparatus for holding the lens (31) to be examined, an interference filter (40), a second convergence lens (60) and a light receiving element (50).

3. An apparatus for measuring light transmittance, which consists essentially of a light source (10), a first convergence lens (20), an apparatus for holding a lens (31), a second convergence lens (60), an interference filter (40) and a light receiving element (50) and an apparatus for holding a lens to be examined which is disposed between the light source (10) and the light receiving element (50), wherein the first convergence lens (20) through which rays of the measuring light converge at or in a position where the lens to be examined is disposed.

4. An apparatus for measuring light transmittance according to claim 3, which further comprises a second convergence lens (60) which is disposed between the apparatus for holding a lens (31) to be examined and the light detector (50) and sends the rays of the measuring light into the light detector (50) in a condition such that the rays converge.

5. An apparatus for measuring light transmittance according to claim 3 or 4, which further comprises a interference filter (40) which is disposed on a path of rays of the measuring light and transmits mostly light having a wavelength within a specific range.

6. An apparatus for measuring light transmittance which comprises a plurality of apparatuses for measuring light transmittance described in claim 5 so that light transmittance can be measured in a plurality of specific ranges of wavelength of light.

## Patentansprüche

1. Verfahren zum Messen der Lichtdurchlässigkeit, welches das Ableiten der Lichtdurchlässigkeit einer zu untersuchenden Linse von einem Wert enthält, der mit einem Verhältnis einer Intensität von Meßlicht, das durch eine licht-erfassende Vorrichtung erfaßt wird, wenn die zu untersuchende Linse in einem Gang des Meßlichts angeordnet ist, das von einer Lichtquelle emittiert wird und eine licht-erfassende Vorrichtung erreicht, und das Meßlicht durch die zu untersuchende Linse hindurchtritt, zu einer Intensität des Meßlichts korrespondiert, das durch eine licht-erfassende Vorrichtung erfaßt wird, wenn die zu untersuchende Linse nicht im Meßweg angeordnet ist und das Meßlicht nicht durch die zu untersuchende Linse hindurchtritt,
**dadurch gekennzeichnet, daß**
a) der Konvergenzpunkt (P) der Meßlichtstrahlen derart ausgebildet ist, daß er auf der Oberfläche der zu untersuchenden Linse (30) auf der Seite der Lichtquelle angeordnet ist;
b) die Lichtdurchlässigkeit der zu untersuchenden Linse unter Verwendung nur einer Vorrichtung gemessen wird, die im wesentlichen aus einer Lichtquelle (10), einer ersten konvexen Linse (20), einer Vorrichtung (31) zum Halten einer Linse, einem Interferenzfilter (40) und einem licht-aufnehmenden Bauteil (50) besteht.

2. Verfahren zum Messen der Lichtdurchlässigkeit nach Anspruch 1, **dadurch gekennzeichnet, daß** die Lichtdurchlässigkeit unter Verwendung einer Vorrichtung gemessen wird, die im wesentlichen aus einer Lichtquelle (10), einer Lochplatte (11), der ersten konvexen Linse (20), einer Vorrichtung (31) zum Halten der zu untersuchenden Linse, einem Interferenzfilter (40), einer zweiten konvexen Linse (60) und einem licht-aufnehmenden Bauteil (50) besteht.

3. Vorrichtung zum Messen der Lichtdurchlässigkeit, die im wesentlichen aus einer Lichtquelle (10), einer ersten konvexen Linse (20), einer Vorrichtung (31) zum Halten einer Linse, einer zweiten konvexen Linse (60), einem Interferenzfilter (40) und einem licht-aufnehmenden Bauteil (50) besteht, und einer Vorrichtung zum Halten einer zu untersuchenden Linse, die zwischen der Lichtquelle (10) und dem licht-aufnehmenden Bauteil (50) angeordnet ist, wobei die erste konvexe Linse (20) angeordnet ist, durch welche die Strahlen des Meßlichts bei oder in einer Position, bei der die zu untersuchende Linse angeordnet ist, zusammenlaufen.

4. Vorrichtung zum Messen der Lichtdurchlässigkeit nach Anspruch 3, **dadurch gekennzeichnet, daß** sie ferner eine zweite konvexe Linse (60) enthält, die zwischen der Vorrichtung (31) zum Halten einer zu untersuchenden Linse und dem Lichtdetektor (50) angeordnet ist, und die Strahlen des Meßlichts in den Lichtdetektor (50) in der Weise sendet, daß die Strahlen zusammenlaufen.

5. Vorrichtung zum Messen der Lichtdurchlässigkeit nach Anspruch 3 oder 4, **dadurch gekennzeichnet, daß** sie ferner einen Interferenzfilter (40) enthält, der in einem Strahlengang des Meßlichts angeordnet ist und hauptsächlich Licht durchläßt, das eine Wellenlänge innerhalb eines spezifischen Bereichs aufweist.

6. Vorrichtung zum Messen der Lichtdurchlässigkeit, **dadurch gekennzeichnet, daß** sie eine Mehrzahl von Vorrichtungen zum Messen der Lichtdurchlässigkeit, die in Anspruch 5 beschrieben sind, derart enthält, daß die Lichtdurchlässigkeit in einer Mehrzahl von spezifischen Lichtwellenlängen-Bereichen gemessen werden kann.

## Revendications

1. Procédé destiné à la mesure de la transmission de lumière qui comprend le fait de dériver la transmission de lumière d'une lentille devant être examinée à partir d'une valeur correspondant à un rapport entre une intensité de la lumière de mesure détectée à l'aide d'un moyen de détection de lumière lorsque la lentille à examiner est placée sur une trajectoire de la lumière de mesure émise à partir d'une source lumineuse et atteignant le moyen de détection de lumière et lorsque la lumière de mesure passe à travers la lentille à examiner, et une intensité de la lumière de mesure détectée par le moyen de détection de lumière lorsque la lentille à examiner n'est pas placée sur la trajectoire de la lumière de mesure et lorsque la lumière de mesure ne passe pas à travers la lentille à examiner,
**caractérisé en ce que**
a) le point de convergence (P) des rayons de la lumière de mesure est formé de façon à se trouver sur la surface de la lentille (30) à examiner du côté de la source lumineuse ;
b) la transmission de lumière de la lentille à examiner est mesurée en n'utilisant qu'un seul appareil, essentiellement constitué d'une source lumineuse (10), d'une première lentille de convergence (20), d'un appareil destiné à tenir la lentille (31), d'un filtre d'interférence (40), et d'un élément de réception de lumière (50).

2. Procédé destiné à la mesure de la transmission de lumière selon la revendication 1, dans lequel la transmission de lumière est mesurée en utilisant un appareil, essentiellement constitué d'une source lumineuse (10), d'une plaque avec trou d'aiguille (11), de la première lentille de convergence (20), d'un appareil destiné à tenir la lentille (31) à examiner, d'un filtre d'interférence (40), d'une seconde lentille de convergence (60), et d'un élément de réception de lumière (50).

3. Appareil destiné à mesurer la transmission de lumière qui est essentiellement constitué d'une source lumineuse (10), d'une première lentille de convergence (20), d'un appareil destiné à tenir la lentille (31), d'une seconde lentille de convergence (60), d'un filtre d'interférence (40) et d'un élément de réception de lumière (50), et d'un appareil destiné à tenir la lentille à examiner disposé entre la source lumineuse (10) et l'élément de réception de lumière (50), dans lequel, à travers la première lentille de convergence (20), les rayons de la lumière de mesure convergent au niveau ou sur une position où est disposée la lentille à examiner.

4. Appareil destiné à mesurer la transmission de lumière selon la revendication 3 qui comprend en outre une seconde lentille de convergence (60) qui est disposée entre l'appareil destiné à tenir la lentille (31) à examiner et le détecteur de lumière (50), et qui envoie les rayons de la lumière de mesure dans le détecteur de lumière (50) dans une condition telle que les rayons convergent.

5. Appareil destiné à mesurer la transmission de lumière selon la revendication 3 ou 4 qui comprend en outre un filtre d'interférence (40) qui est disposé sur une trajectoire des rayons de la lumière de mesure, et qui transmet la plus grande partie de la lumière ayant une longueur d'onde située dans une plage spécifique.

6. Appareil destiné à mesurer la transmission de lumière qui comprend une pluralité d'appareils de mesure de la transmission de lumière décrits dans la revendication 5, de façon à pouvoir mesurer la transmission de lumière dans une pluralité de plages spécifiques de longueurs d'ondes de lumière.
